# EUROPEAN PATENT SPECIFICATION

(11) **EP 2 651 213 B1**
(45) Date of publication and mention of the grant of the patent: **30.09.2015**
(21) Application number: 11819152.7
(22) Date of filing: 12.12.2011
(51) Int. Cl.: A01K 83/06, A01K 91/04, A01K 97/04

(54) **Method and device for binding of fish-bait and a fish-bait**
Verfahren und Vorrichtung zum Binden von Fischködern und Fischköder
Méthode et dispositif de ligature d'appât pour poissons et appât pour poissons

(30) Priority: 17.12.2010 CZ 20100945
(43) Date of publication of application: 23.10.2013
(73) Proprietor: Technicka Univerzita v Liberci, 461 17 Liberec (CZ)
(72) Inventor: BERAN, Jaroslav, 46311 Liberec (CZ); KOPAL, Jaroslav, 46008 Liberec (CZ); KONECNY, Martin, 46010 Liberec (CZ); ZABKA, Petr, 46001 Liberec (CZ); KOVAR, Simon, 46001 Liberec (CZ)
(74) Representative: Musil, Dobroslav
(86) International application number: PCT/CZ2011/000115
(87) International publication number: WO 2012/079547

(56) References cited:
- DE-U1- 8 802 496
- GB-A- 2 378 113
- GB-A- 2 388 289
- GB-A- 2 401 298

## Description

### Technical field

The invention concerns a fish-bait binding method, where a thread is pulled through a centre of a bait and loose ends of a thread are connected on an outer side of the bait and are shortened to proper length.

The invention also concerns a device for fish-bait binding.

The invention also concerns a fish-bait equipped with a thread loop binded by a thread pierced through the center of the bait.

### Backaround art

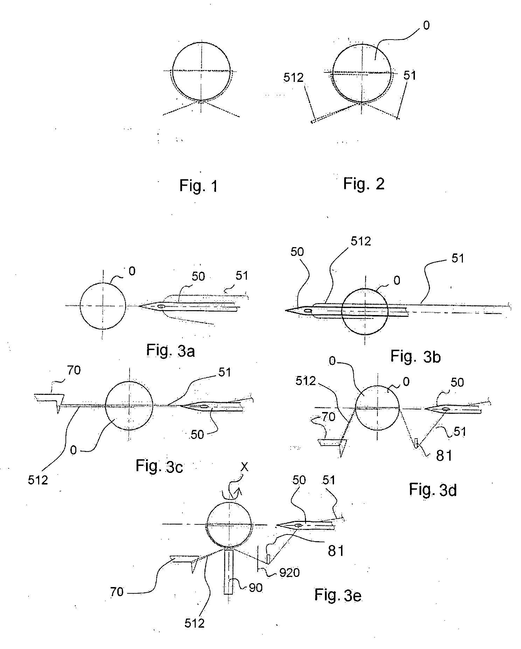

Suitable composition dough balls, which are cooked or baked, are used as a type of fish-bait. The balls are equipped with different types of loops for hanging on a fish hook after cooking or baking. There is a way to equip the ball with a loop, where a thread is pulled through the ball, tied in a knot on the outer side of the ball and cut off, while 8 - 12 mm long loose ends of the thread are left. This is done manually; the ball is pierced manually, strung on a thread and loose ends are tied in a knot. The thread loop of the ball used to date is illustrated in Fig. 1. The thread goes simply through the centre of the ball and its loose ends are tied in a knot and cut off by this well-known design.

The necessity of handwork involved, which is both expensive and relatively low efficient, is a drawback of the present state of the technique. There is no known device that can replace handwork in fish-bait binding.

Document GB 2 401 298 A discloses a fish-bait binding device for pulling a thread through the centre of a bait and connecting its loose ends on each side of the bait to a bait stop device and to a fishing hook.

The goal of the invention is to reduce or eliminate completely handwork necessity and to increase productivity.

### Principle of the Invention

The purpose of the invention is achieved by a method of fish-bait binding according to claim 1, the principle of which lies in connecting loose ends of the thread with a welding component on the outer side of the bait by twisting the loose ends of the thread together and subsequently exposing the twisted section of the loose ends of the thread to heat.

The purpose of the invention is further achieved by a fish-bait binding device according to claim 4 and by a fish bait according to claim 14.

The method, the device and the fish-bait enable reduction or complete elimination of handwork at fish-bait binding while productivity is increased.

### Description of the drawing

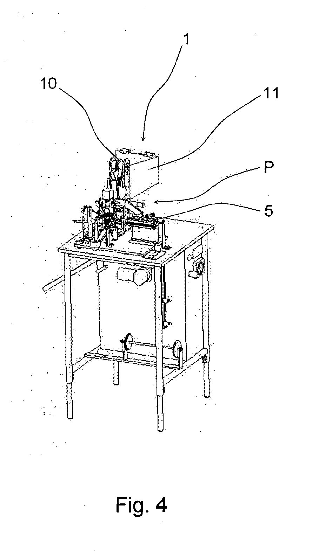

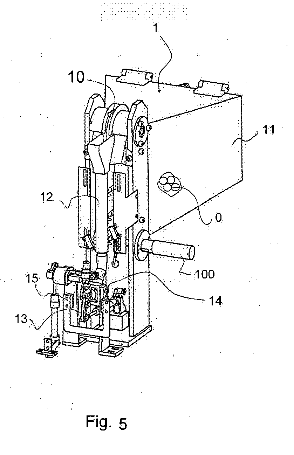

The invention is schematically depicted in the drawing where the loop of the ball used to date is in Fig. 1, the loop of the ball according the invention design is in Fig. 2, the process of fish-bait binding according the invention is in Fig. 3a through 3e, the overall setup of the device according to the invention is in Fig. 4, the setup of the stack of bait with the automatic feeder is in Fig. 5, the setup of the main hook grips is in Fig. 6, the setup of the ball inserter is in Fig. 7, the setup of the support is in Fig. 8, the setup of the bait piercing mechanism is in Fig. 9, the setup of the needle guide mechanism is in Fig. 10, the setup of the looper mechanism is in Fig. 11, the setup of the movable shift fork is in Fig. 12, the setup of the thread welding device is in Fig. 13 and the setup of the thread cutting mechanism is in Fig. 14.

### Examples of embodiment

The invention will be described on the example of the fish-bait binding device design and on the way it works.

The fish-bait binding device contains a number of mechanisms and working parts, which are assembled on the workspace **P.** Setups of particular mechanisms and working parts and how they are related to the workspace **P** will be described.

The fish-bait binding device contains the stack **1** of balls **0** with the automatic feeder **10.** The stack **1** of balls **0** contains the conical feed hopper **11** for balls **0** which is equipped with the flip lid. The automatic ball feeder **10** is formed by the vertical bucket conveyor. Its arm leads through the feed hopper **11** from bottom and fetches balls **0** up from the feed hopper **11** to the input at the top of the slide tube **12.** Automatic ball feeder 10 is coupled with the motor **100,** which is connected to the controller. The pneumatic cylinder **14** driven tilting stop **13** is at the bottom of the slide tube **12.** The tilting stop **13** keeps a ball column inside the slide tube **12.** Seating of the ball column on the flip lid forming the tilting stop **13** inside the slide tube **12** is controlled by the optical sensor **15,** which is connected to the controller. Control of seating of the ball column on the flip lid **13** inside the slide tube **12** is intended for the correct and safe ball **0** catch in the grips **30** at the bottom end of the slide tube **12** with the inserter **2** connected functionally.

The ball **0** inserter **2** serves for carrying of the ball **0** set at the bottom end of the slide tube **12** before the flip lid **13** into the main hook **3** grips **30.** The ball **0** is in the grips **30** during the thread binding. The main hook **3** grips **30** are suitably in the bowl shape for better catch of the ball **0.**

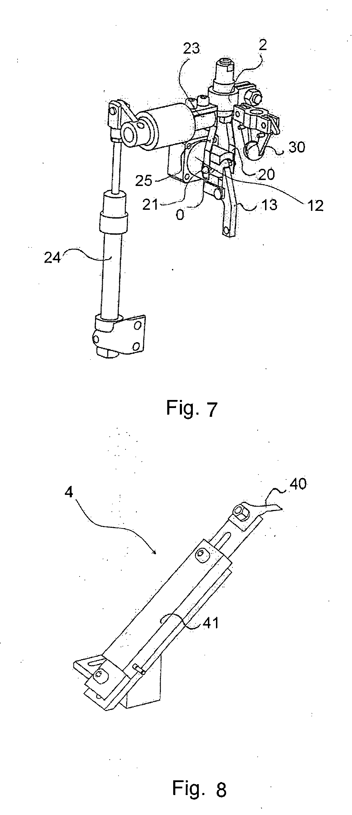

It is depicted in Fig. 7 that the inserter **2** contains the pneumatic grip **20** with openable - i.e. separable from each other - flexible arms **21.** There are spikes **22** aimed towards the ball **0** at ends of the arms **21** for steady grip of the ball **0** when the arms **21** catch it. The grip **20** is set radially on the spindle **23,** which is placed rotatingly around its direct axis in the device frame. The spindle **23** is coupled with the drive **24,** which is connected to the controller. When the stop **13** tilts away and the spindle **23** turns, the ball **0,** which is caught by the flexible arms **21,** is carried from the bottom end of the slide tube **12** to the open grips **30** of the main hook **3,** which are at the end position of the inserter grip **20.** The grips **30** are closed again after the ball **0** is carried. When the flexible arms **21** open the ball **0** is released and the spindle **23** turns back and returns the flexible arms **21** to their initial position for catching the next ball **0.** At the same time, when the ball **0** leaves the bottom end of the slide tube **12,** tilting stop **13** returns back to the bottom end of the slide tube **12** and prevent the next ball **0** from falling from the slide tube **12.**

The fish-bait binding device also contains the support **4,** which is depicted in Fig. 8. It includes the support pad **40,** which is placed on the moving part of the pneumatic cylinder **41** and which is positioned under the main hook **3** grips **30** when the pneumatic cylinder **41** is in extended position. The support pad 40 helps to secure the ball **0** when it is being caught by the main hook **3** grips **30.** If the ball **0** is not in the perfectly round shape, the main hook **3** grips **30** can catch it improperly which can lead to problems during piercing the ball **0** with the needle **51** and thread **51.** When the pneumatic cylinder **41** is in retracted position, the support pad **40** is positioned completely out of the device workspace **P.**

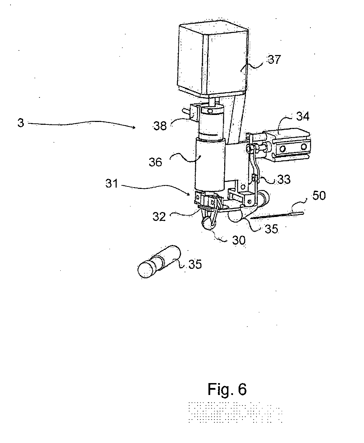

As depicted in Fig. 6, the main hook **3** grips **30** are set in the holder **31** swinging against each other and they are linked with counterworking springs **32** which ensure the grips **30** are closed against each other permanently. The grips **30** are opened by the splaying lever **33** for ball **0** catching or releasing. One end of the splaying lever **33** is positioned between free parts of the grips **30.** The second end is coupled with the push-pull pneumatic cylinder **34** whose end positions are controlled by sensors. The position of the ball **0** properly caught when the grips **30** are closed is controlled by the sensor **35,** favourably the laser sensor, which is placed on the grips **30.** The grips holder **31** is set rotatingly in the holder body **36** and it is coupled with the drive **37,** favourably the stepper motor. The sensor **38,** favourably the inductive sensor, is assigned to the drive **37** for positioning the grips **30** while the holder **31** is turning around the vertical axis. The reason will be explained further.

The space, where the main hook **3** grips **30** are set at, is the workspace **P** which is mentioned at the beginning of description of the invention design examples.

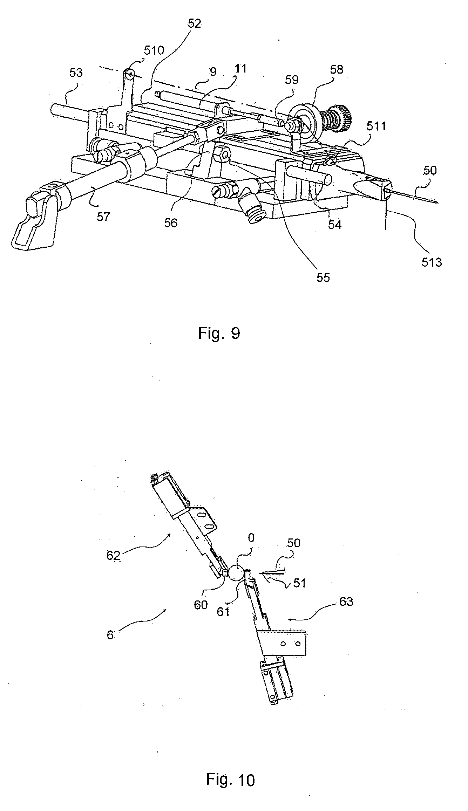

Further, there is the ball **0** piercing mechanism **5** set in the workspace **P** as visible in Fig. 9. It contains the linear drive **52,** such as pneumatic drive, while the ball **0** piercing needle **50** is set on the movable part of the drive **52.** A lift of the needle **50** therefore also of the movable part of the drive **52** is adjustable by the stop screws **53** and **54.** There are sensors assigned to the end positions of the needle **50** or movable part of the drive **52,** which set working continuity of the other mechanisms and working parts. Additional adjustable stop **55** is mounted at the back part of the drive **52** to delimit second shorter forward movement of the needle **50.** This movement makes the thread **51** to release as much as needed for encircling the ball **0** and making a twist as described further. The tilting stop **56** is assigned to the additional adjustable stop **55,** which is driven by the drive **57,** e.g. a single-acting pneumatic cylinder. The ball **0** piercing mechanism **5** also contains thread **51** plate break **58,** which holds the thread **51** when the needle **50** moves forward and releases it when the needle **50** moves backward. The needle **50** releases the break **58** when moving backwards by inserting itself between break **58** plates. The thread **51** goes to the needle **50** through the thread guide **510,** the plate break **58,** the thread guide **511,** and the needle hooklet **513** and to the needle slot. According to the invention, the thread **51** is bicomponente fibre composed of a carrier component and a welding component for fish-bait binding joint thermal securing as will be described later. Either the welding component can be in a mixture with the carrier component, or they can be woven together, or it can be dabbed on the surface of the carrier thread.

Furthermore, the needle **50** guide mechanism **6**, which is in Fig. 10, is set in the workspace **P.** It prevents the needle **50** from an axial deviation or bending during the ball **0** piercing. The needle **50** guide mechanism **6** contains a couple of draw rings **60** and **61,** which are adjustable from the idle position out of the workspace **P** to the working position in the workspace **P.** In the working position one of the draw rings **60** and **61** is situated in the direction of the needle **50** movement, before the main hook **3** grips **30,** and the other one is situated behind the main hook **3** grips **30.** The draw rings **60** and **61** are set in the movable parts of the drives **62** and **63** which are placed in the device frame. An oblong slot is made in the opening of the draw rings **60** and **61** for the thread drawing.

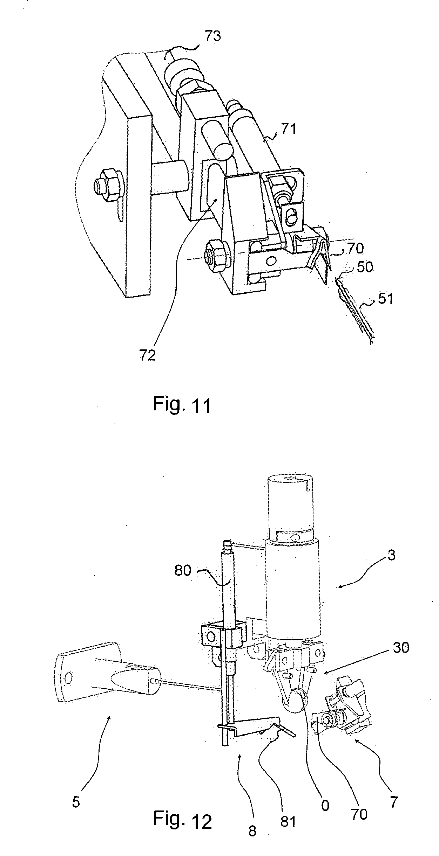

Furthermore, the looper mechanism **7**, which is in Fig. 11, is set in the workspace **P.** It serves for catching the twist of the thread **51,** which is pulled through the pierced ball **0,** from the needle **50** by the hook **70** and for shifting the twist of the thread **51** to the positions indicated in Fig. 3c and 3d for the thread loop mechanical binding, i.e. for the fish-bait binding. The hook **70** is swingingly set on the piston **72** of the working cylinder **73.** It is coupled with the drive **71,** e.g. a pneumatic cylinder, for swinging. The piston **72** of the working cylinder **73,** e.g. of a pneumatic cylinder, makes a liner recuperative movement.

Furthermore, the movable fork **8** for thread **51** shifting is set in the workspace **P,** as depicted in Fig. 12. It is coupled with the drive **80,** which is set in the device assembly. The shift fork working end **81** movement track between the idle position out of the workspace **P** and the working position inside the workspace **P** crosses the thread **51** track between the pierced ball **0** and the needle **50,** which is protruded from the ball **0** after it is pierced. Before the fork **8** shifts to the bottom position, the thread **51** is released by the drive **52** movement (Fig. 9) to the adjustable stop **55** for encircling the ball **0.**

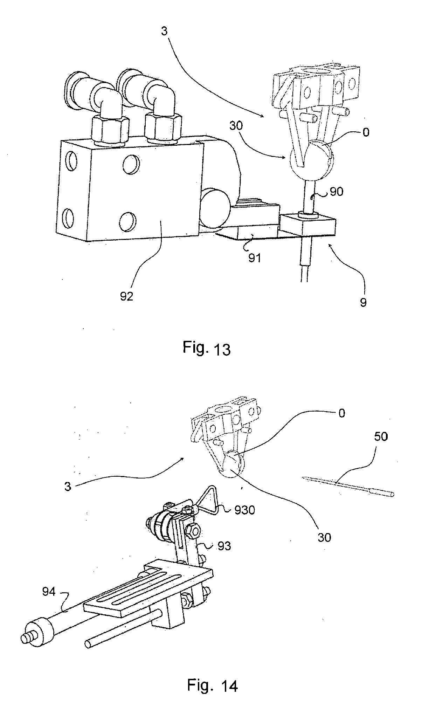

On the level under the main hook **3** grips **30,** there is the thread welding device **9** set in the workspace **P,** as depicted in Fig. 13. The thread welding device **9** contains the welding needle **90,** which is electrically heated, e.g. by a resistance wire, and its temperature is controlled by a thermocouple. The welding needle **90** is set on the hinged arm **91** of the pneumatic grip **92** which is connected to the controller. The welding needle **90** is adjustable between its idle position out of the workspace **P** and its working position under the main hook **3** grips **30.**

As depicted in Fig. 14, there is also the thread cutting mechanism **93** set in the workspace **P.** It shifts the resistance wire **930** into the workspace **P** and out of it by means of the working cylinder **94** connected to the controller, for cutting the thread **51** between the ball **0** and the needle **50** in the position protruded from the pierced ball **0,** or in the idle position. The resistance wire **930** is connected to the electric current source and it is heated up to the required temperature. The resistance wire **930** is adjustable between its idle position out of the workspace **P** and its working position in the workspace **P.** While the resistance wire **930** is moving between the idle position and the working position, it crosses the thread **51** track between the needle **50** and the ball **0** caught by the grips **30** after the ball **0** is pierced, which leads to the heat cutting of the thread **51.**

By means of the device constructed according to this invention, the fish-bait is tied to the form, which is seen in Fig. 2. The thread **51,** which makes the fish-bait thread loop, is doubled and it is pulled through the centre of the ball **0** in the way that the loose end of the thread **51** stays inside the ball **0.** So, on one side of the ball **0** (behind the ball **0** in the direction of the needle **50** movement), the thread **51** bow **512** leads from the ball **0** and on the other side of the ball **0,** i.e. between the ball **0** and the needle **51,** there is only the single thread **51.** The doubled part of the thread **51** and the single part of the thread **51** are twisted in one or several turns on the bottom part of the ball **0** circumference and subsequently they are welded together by the welding needle **90.** After that, the redundant part of the single thread **51** is cut (burnt off).

The method of the fish-bait binding is shown in Fig. 3a through 3e. First the needle **50** (Fig. 3a) stands against the centre of the ball **0,** which is caught in the main hook **3** grips **30.** The ball **0** is transported from the stack **1** to the ball **0** inserter **2** through the slide tube **12** and then the ball **0** is carried to the main hook **3** grips **30.** The bicomponente thread **51** with loose ends of the required length is threaded in the eye of the needle **50.** The needle **50** unwinds the thread **51** from the reel, which is not depicted. Afterwards, the needle **50** pierces the ball **0** and the length of the doubled part of the thread **51** behind the ball **0,** i.e. the length of the bow **512,** corresponds to the length required for encircling a half of the ball **0** circumference and the length of the loose end behind the welded thread **51** twist. The loose end of the thread stays inside the ball **0.** The described part of the procedure is in Fig. 3b. After that, the resulting thread **51** bow **512** is caught by the hook **70** of the looper mechanism **7** and the needle **50** moves back to the idle position in front of the ball **0**. In this position the thread **51** goes through the eye of the needle **50,** through the ball **0** and around the hook **70** back to the ball **0**. This situation is shown in Fig. 3c. Afterwards, as depicted in Fig. 3d, the hook **70** with the bow **512** moves down under the level of the ball **0** and, at the same time, the shift fork working end 81 diverges the thread **51** in the section between the needle **50** and the ball **0** under the level of the ball **0**. Nest step is depicted in Fig. 3e. The ball **0** is rotated one or several turns around its vertical axis by rotation of the main hook **3** grips **30** in the direction **X** so the twist of the bow **512** between the ball **0** and the hook **70** and the thread **51** between the ball **0** and the needle **50** is created under the ball **0**. After that, the heated welding needle **90** is moved next to the twist of the bow **512** and the thread **51** and a weld of the bow **512** and the thread **51** is made at the place of the twist. Afterwards, the thread **51** is severed or burnt through by the resistance wire **930** of the thread **51** cutting mechanism **93** between the weld of the bow **512** and the thread **51** and the shift fork **8** working end 81. At this point, the fish-bait is tied. The main hook **3** grips **30** unclench and the ball **0** falls off the device down to the tied balls **0** container, which is not depicted.

It is evident that the fish-bait doesn't have to be ball-shaped only but it can be in some other suitable shape as a cube, a cuboid etc.

There are design examples, which are not shown, and where the fish-bait binding device is assembled at the lower grade of automatization. The lowest grade is represented by the design which contains the manually driven (both opening and rotating) main hook **3** and the bait is inserted into the main hook **3** manually. The tied bait is also manually removed from the hook after twisting and thermal joining of the thread **51** ends, while the device for thermal joining of the thread **51** ends is separated from the fish-bait binding device assembly and it is manually driven. At others not shown design examples, the fish-bait binding device contains some of the forementioned automatically working nodes.

### Industrial applicability

The invention is applicable for fish-bait preparation.

### List of Referential marks

- 0: ball
- 1: stack of balls
- 10: automatic ball feeder
- 100: motor
- 11: feed hopper
- 12: slide tube
- 13: tilting stop
- 14: pneumatic cylinder
- 15: optical sensor
- 2: ball inserter
- 20: inserter grip
- 21: flexible arm
- 22: aimed spike
- 23: spindle
- 24: drive
- 3: main hook
- 30: main hook grips
- 31: holder
- 32: spring
- 33: splaying lever
- 34: pneumatic cylinder
- 35: sensor
- 36: holder body
- 37: drive
- 38: sensor
- 4: support
- 40: support pad
- 41: pneumatic cylinder
- 5: ball piercing mechanism
- 50: needle
- 51: thread
- 510: thread guide
- 511: thread guide
- 512: bow
- 513: needle hooklet
- 52: drive
- 53: stop screw
- 54: stop screw
- 55: adjustable stop
- 56: tilting stop
- 57: drive
- 58: thread plate break
- 6: needle guide mechanism
- 60: draw ring
- 61: draw ring
- 62: drive
- 63: drive
- 7: looper mechanism
- 70: hook
- 71: drive
- 72: piston
- 73: working cylinder
- 8: shift fork
- 80: drive
- 81: shift fork working end
- 9: thread welding device
- 90: welding needle
- 91: hinged arm
- 92: pneumatic grip
- 93: thread cutting mechanism
- 930: resistance wire
- 94: working cylinder
- P: workspace

## Claims

1. A fish-bait binding method, where a thread is pulled through a centre of a bait and loose ends of a thread are connected on an outer side of the bait and are shortened to proper length; **characterized by** connecting loose ends of the thread (51), which contains a welding component, on the outer side of the bait by twisting the loose ends of the thread (51) together and subsequently exposing the twisted section of the loose ends of the thread (51) to heat.

2. A method according to claim 1 **characterized by** the fact that twisting of the loose ends of the thread (51) is done by at least three hundred and sixty degrees rotation of the bait.

3. A method according to claim 1 **characterized by** the fact that exposing of the twisted section of the loose ends of the thread (51) to heat is done by moving an electrically heated element next to the twisted section of the loose ends of thread (51).

4. A fish-bait binding device for binding a thread loop through a center of a fish-bait according to any one of claims 1 to 3, **characterized by** the fact that it contains separable main hook (3) grips (30) for gripping a bait, which are set in a workspace (P) of the device, and which are put together rotatingly around a common axis; while to the grips (30) in the workspace (P) is assigned a bait piercing mechanism (5) including a piercing needle (50) to pull thread (51) which makes the fish bait thread loop through the centre of the bait, the grips (30) being equipped with a thread (51) welding device (9) with an electrically-heated welding needle (90), while the thread (51) contains a welding component.

5. A fish-bait binding device according to claim 4 **characterized by** the fact that the main hook (3) grips (30) are set in a holder (31) swinging against each other; the holder (31) being set rotatingly in a holder body (36) and being coupled with a drive (37); a sensor (38) being assigned to the drive (37) for positioning the grips (30) while the holder (31) is rotating; the grips (30) being linked with counterworking springs (32) and a splaying lever (33) being assigned to them; one end of the splaying lever (33) being positioned between free parts of the grips (30) and a second end being coupled with a push-pull pneumatic cylinder (34) whose end positions are controlled by sensors; sensors (35) of the bait catch being assigned to the grips (30).

6. A fish-bait binding device according to claim 4 **characterized by** the fact that to the main hook (3) grips (30) is assigned a bait inserter (2) from a bait stack (1 ).

7. A fish-bait binding device according to claim 6 **characterized by** the fact that the bait stack (1) contains a conical feed hopper (11) and a bait feeder (10), which contains a vertical bucket conveyor whose arm leads through the feed hopper (11) from bottom and it is connected to a slide tube (12) at its top end; to the bottom end of the slide tube (12) being assigned a tilting stop (13) and an optical sensor (15) and one position of a pneumatic grip (20) of the bait inserter (2) for inserting the bait to the grips (30).

8. A fish-bait binding device according to claim 6 **characterized by** the fact that the bait inserter (2) contains a pneumatic grip (20) with openable flexible arms (21), which are equipped with spikes (22) aimed towards the bait; the grip (20) being set radially on a spindle (23), which is placed rotatingly around its direct axis in the device frame and which is coupled with a drive (24).

9. A fish-bait binding device according to claim 4 **characterized by** the fact that the bait piercing mechanism (5) assigned to the main hook (3) grips (30) contains a drive (52) with linear guidance; the needle (50) being set on a movable part of the drive (52); the mechanism (5) also containing stop screws (53, 54) and sensors of the needle (50) end positions; an additional adjustable stop (55) of the needle (50) being mounted at the back part of the drive (52); a tilting stop (56) with a drive (57) being assigned to the adjustable stop (55); the mechanism (5) also containing a plate brake (58), the threads (51) and thread guides (510, 511).

10. A fish-bait binding device according to claim 4 **characterized by** the fact that there is a looper mechanism (7) assigned to the main hook (3) grips (30); the looper mechanism (7) containing a hook (70), which is swingingly set on a piston (72), which is coupled with a drive (73); the hook being coupled with a drive (71).

11. A fish-bait binding device according to claim 4 **characterized by** the fact that there is a thread (51) shift fork (8) assigned to the main hook (3) grips (30) and coupled with a drive (80); a shift fork working end (81) movement track between an idle position out of the workspace (P) and a working position inside the workspace (P) crossing the thread (51) track between the pierced bait and the needle (50), which is protruded from the bait after it is pierced.

12. A fish-bait binding device according to claim 4 **characterized by** the fact that the welding needle (90) is set on a hinged arm (91), which is hingingly set in the device assembly and it is coupled with a drive (92).

13. A fish-bait binding device according to claim 4 **characterized by** the fact that there is a thread (51) cutting mechanism (93) assigned to the main hook (3) grips (30); it cuts the thread (51) between the bait and the needle (50) in the position protruded from the pierced bait.

14. A fish-bait equipped with a thread loop binded by a thread pierced through the center of a bait **characterized by** the fact that the thread contains welding component; and that the thread loop ends are twisted on the outer side of the bait, and are thermally joint.

15. A fish-bait according to claim 14 **characterized by** the fact that the thread making the fish-bait thread loop is doubled and pulled through the center of the bait, while one loose end of the thread (51) is inside the bait so that, on one side of the bait a thread (51) bow (512) leads from the bait and on the other side of the bait, there is only a single thread (51); the doubled part of the thread (51) and the single part of the thread (51) being twisted in one or several turns on the bottom part of the bait circumference and being thermally joint.

## Patentansprüche

1. Bindeverfahren des Fischköders, wobei ein Faden durch eine Mitte eines Köders gezogen wird und lose Enden eines Fadens auf einer äußeren Seite des Köder verbunden werden und auf richtige Länge verkürzt werden; **gekennzeichnet durch** Verbindung loser Enden des Fadens (51), die eine Schmelzkomponente enthalten, an der Außenseite des Köders **durch** Zusammenverdrehen der losen Enden des Fadens (51) und anschließend Aussetzen des verdrehten Abschnittes der losen Enden des Fadens (51) der Wärme.

2. Bindeverfahren nach Anspruch 1, **gekennzeichnet durch** die Tatsache, dass das Verdrehen der losen Enden des Fadens (51) **durch** mindestens dreihundertsechzig Grad der Umdrehung der Köder getan wird.

3. Bindeverfahren nach Anspruch 1, **gekennzeichnet durch** die Tatsache, dass die Aussetzen des verdrehten Abschnittes der losen Enden des Fadens (51) der Wärme **durch** Bewegung eines elektrisch geheizten Elementes neben dem verdrehten Abschnitt der losen Enden des Fadens (51) getan wird.

4. Bindeeinrichtung des Fischköders für Binden einer Fadenschlinge durch eine Mitte eines Fischköder nach einem der Ansprüche 1 bis 3, **gekennzeichnet durch** die Tatsache, dass es trennbare Griffe (30) des Hauptgreiffers (3) zum Greifen eines Köders enthält, die auf Arbeitsfläche (P) der Vorrichtung eingestellt werden und die zusammen drehbar um eine gemeinsame Achse eingestellt sind; während den Griffen (30) auf der Arbeitsfläche (P) ein Durchstechmechanismus (5) des Köders zugeordnet wird, der Durchstechmechanismus (5) eine Nadel (50) enthält, damit der Faden (51) **durch** die Mitte des Köders durchgezogen wird, um Fadenschlinge des Fischköders zu binden, die Griffe (30) werden mit einem Schweißvorrichtung (9) des Fadens (51) eingerichtet, die eine elektrisch beheizte Schweißnadel (90) enthält, während der Faden (51) eine Schmelzkomponente enthält.

5. Bindevorrichtung des Fischköders nach Anspruch 4, **gekennzeichnet durch** die Tatsache, daß Griffe (30) des Hauptgreiffers (3) in einen Halter (31) schaukelnden gegeneinander eingelegt werden; der Halter (31) drehbar in einem Halterkörper (36) festgelegt wird und mit einem Antrieb (37) gekoppelt ist; eine Sensor (38) wird dem Antrieb (37) zur Positionierung der Griffe (30) zugeordnet, während der Halter (31) dreht; die Griffe (30) werden mit gegeneinander wirkenden Springfedern (32) gekoppelt und ihnen wird eine Aufklappe Hebel (33) zugeordnet; ein Ende der Aufklappe Hebel (33) wird zwischen den freien Teilen der Griffe (30) positioniert und das zweite Ende mit einem doppeltwirkenden Pneumatik Zylinder (34) gekoppelt wird, dessen Endlagen **durch** Sensoren kontrollieren werden; den Griffen (30) Sensoren (35) des Ködergreifens zugeordnet werden.

6. Bindevorrichtung des Fischköders nach Anspruch 4, **gekennzeichnet durch** die Tatsache, dass Griffen (30) des Hauptgreiffers (3) ein Köderinserter (2) von einem Köderspeicher (1) zugeordnet wird.

7. Bindevorrichtung des Fischköders nach Anspruch 6, **gekennzeichnet durch** die Tatsache, dass der Köderspeicher (1) einen konischen Einlauftrichter (11) und einen Köderzubringer (10) enthält, der einen vertikalen Becherförderer enthält, dessen ein Arm **durch** den Einlauftrichter (11) vom unten durchläuft, und er an oberen Ende einer Rutschröhre (12) anbindet; Am unteren Ende der Rutschröhre (12) wird ein Kippanschlag (13) und ein optischer Sensor (15) und eine Position des Pneumatikgriffes (20) des Köderinserters (2) zum Einfügung des Köders in den Griffen (30).

8. Bindevorrichtung des Fischköders nach Anspruch 6, **gekennzeichnet durch** die Tatsache, dass der Köderinserter (2) einen pneumatischen Griff (20) mit öffnenden flexiblen Armen (21) enthält, die mit gegen die Richtung des Köders gerichtete Spitzen (22) ausgerüstet sind; der Griff (20) ist radial auf einer Welle (23) eingelegt, die im Vorrichtungsrahmen drehbar länglich um seine Achse angeordnet ist und mit einem Antrieb (24) gekoppelt ist.

9. Bindevorrichtung des Fischköders nach Anspruch 4, **gekennzeichnet durch** die Tatsache, dass der Köderdurchstechmechanismus (5), der den Griffen (30) des Hauptgreiffers (3) zugeordnet wird, ein Antrieb (52) mit Linearführung enthält; eine Nadel (50) an einem beweglichen Teil des Antriebs (52) festgelegt wird; das Mechanismus (5) weiter Anschlagschrauben (53, 54) und Sensoren der Endposition der Nadel (50) enthält; ein zusätzlicher einstellbarer Anschlag (55) der Nadel (50) auf dem Rückenteil des Antriebs (52) eingelegt wird; dem Anschlag (55) ein Kippanschlag (56) mit einem Antrieb (57) zugeordnet wird; der Mechanismus (5) weiter eine Tellerbremse (58) des Fadens (51) und Fadenführungen (510, 511) enthält.

10. Bindevorrichtung des Fischköders nach Anspruch 4, **gekennzeichnet durch** die Tatsache, dass ein Schlingengreiffermechanismus (7) den Griffen (30) des Hauptgreiffers (3) zugeordnet ist; der Schlingengreiffermechanismus (7) einen Greifer (70) enthält, der schwenkbar auf einem Bolten (72) festgelegt ist, der mit einem Antrieb (73) gekoppelt ist; wobei der Greifer (70) mit einem Antrieb (71) gekoppelt ist.

11. Bindevorrichtung des Fischköders nach Anspruch 4, **gekennzeichnet durch** die Tatsache, dass ein beweglicher Schaltgabel (8) des Fadens (51) den Griffen (30) des Hauptgreiffers (3) zugeordnet wird, der mit einem Antrieb (80) gekoppelt ist; eine Bewegungsbahn des Arbeitsendes (81) einer Schaltgabel (8) zwischen einer Ruheposition ausser die Arbeitsfläche (P) und einer Arbeitsposition innerhalb des Arbeitsfläche (P) eine Bahn des Fadens (51) zwischen dem durchbohrten Köder und der Nadel (50), die aus dem Köder ausgerückt ist, kreuzt.

12. Bindevorrichtung des Fischköders nach Anspruch 4, **gekennzeichnet durch** die Tatsache, dass die Schweißnadel (90) auf einem klappbaren Arm (91) gelegt wird, der klappbar in dem Vorrichtungsrahmen gelegt wird, und mit einem Antrieb (92) gekoppelt ist.

13. Bindevorrichtung des Fischköders nach Anspruch 4, **gekennzeichnet durch** die Tatsache, dass ein Schneidmechanismus (93) des Fadens (51) den Griffen (30) des Hauptgreiffers (3) zugeordnet wird; der den Faden (51) zwischen dem Köder und der Nadel (50) in der aus dem Köder ausgerückte Position nach seinem Durchstich schneidet.

14. Ein Fischköder, der mit einer Fadenschlinge ausgerüstet ist, die durch die Mitte des Köders verbunden ist, **dadurch gekennzeichnet, dass** der Faden (51) Schmelzkomponente enthält; und dass die Enden der Fadenschlinge auf der Außenseite des Köders verdreht sind und durch die Wärme verbunden sind.

15. Ein Fischköder nach Anspruch 14, **gekennzeichnet durch** die Tatsache, daß der Faden (51), der die Fadenschlinge des Fischköder bildet, verdoppelt **durch** die Mitte des Köders durchgezogen ist, wobei ein loses Ende des Fadens (51) innerhalb des Köders ist, so daß die Schlinge (512) auf einer Seite aus dem Köders hervorragt, und auf der anderen Seite des Köders nur ein einziger Faden (51) ist; der doppelte Teil des Fadens (51) und der einzige Teil des Fadens (51) mit einer oder mehreren Windungen auf dem unteren Teil des Köders verdreht sind und **durch** die Wärme verbunden sind.

## Revendications

1. Procédé de liage du leurre de pêche, durant lequel on pousse le fil à travers le centre du leurre de pêche et les extrémités libres du fil sur la partie extérieure du leurre de pêche se joignent en commun, en se racourcissant à une longueur souhaitée, **caracterisé en ce que** sur le côté extérieur du leurre de pêche les extrémités libres du fil (51) contenants un composant fusible se joignent en commun par la torsion, et, ensuite par le traitement thermique subséquent dans la zone de la torsion des extrémités libres du fil (51).

2. Procédé selon la revendication 1, **caractérisé en ce que** la torsion des extrémités libres du fil (51) est réalisée en faisant tourner l'appât au moins 360°. 3. Procédé selon la revendication 1, **caractérisé en ce que** le traitement thermique dans la zone de la torsion des extrémités libres du fil (51) est mise en oeuvre en plaçant un élément chauffé électriquement pour tordre les extrémités libres du fil (51).

3. Procédé selon la revendication 1, **caractérisé en ce que** le traitement thermique dans la zone de la torsion des extrémités libres du fil (51) est mise en oeuvre en plaçant un élément chauffé électriquement pour tordre les extrémités libres du fil (51).

4. Dispositif pour un liage du leurre de pêche, dans lequel une attache de fil est tiré par le centre de l'appât selon l'une quelconque des revendications 1 à 3, **caractérisé en ce qu** 'il comprend les pinces-tentacules (30), , du crochet principal (3) pour la préhension de l'appât, qui peuvent s' éloignent l'un à l'autre et qui sont disposées dans la zone de travail (P) de l'appareil et sont stockées ensemble pour tourner autour d'un axe commun en ayant affectés un appareil de perçage les billes (5) comprenant une aiguille (50) à l'aide de laquelle l'attache de fil du leurre de pêche est tiré par le centre de l'appât en même temps que les pinces-tentacles (30) sont équipées d'un dispositif (9) pour souder le fil (51) avec une aiguille de soudage chauffés électriquement (90) et le fil (51) comprend un composant fusible.

5. Le dispositif pour un liage du leurre de pêche selon la revendication 4, **caractérisé en ce que** les pinces-tentacles (30) du crochet principal (3) sont montées de façon pivotante en face de l'autre dans un support (31) qui est monté de manière rotative dans le boîtier (36) du crochet et le support est lié avec l'entraînement (37), qui est attribué au capteur (38) destiné à déterminer la position des pinces-tentacles (30) pendant la rotation du support (31) et les pinces-tentacles (30) sont couplés avec les autres ressorts (32) agissant l'un contre l'autre, et les ressorts sont attribués au levier déroulante (33) qui est à une extrémité située entre les parties libres des pinces-tentacules (30) et qui est couplé à son autre extrémité avec un vérin pneumatique à double effet (34) dont les positions extrêmes sont commandés par des capteurs, de même que les pinces-tentacules (30) sont associés au capteur (35) saisissant la fixation du leurre de pêche dans les pinces-tentacules (30).

6. Le dispositif selon la revendication 4, **caractérisé en ce que** les pinces-tentacules (30) du crochet principal (3) est affectée un transporteur (2) du leurre de pêche à partir du réservoir (1) à leurre de pêche.

7. Le dispositif pour un liage du leurre de pêche selon la revendication 6, **caractérisé en ce que** le réservoir (1) comprend une trémie appât conique (11) et un alimenteur (10) à leurre de pêche, qui comprend un convoyeur à godets vertical, dont une branche passe à travers la trémie (11) par le bas, se joint à l'extrémité supérieure du tube de glissement (12), à l'extrémité inférieure duquel est butée l'associée de basculement (13), un capteur optique (15) et une position des organes des pinces-tentacules pneumatiques (20) du transporteur (2) pour l'insertion d'un appât dans les pinces-tentacules (30).

8. Le dispositif pour un liage du leurre de pêche selon la revendication 6, **caractérisé en ce que** le transporteur (2) du leurre de pêche comporte des pinces-tentacules pneumatiques (20) avec des bras flexibles déroulantes (21) qui sont prévus contre les appâts dirigée dents (22), dans lequel les pinces-tentacules pneumatiques (20) sont monté radialement sur l'arbre (23) qui peut tourner autour de son axe longitudinal dans le bâti de machine et qui est couplé avec l'entraînement (8).

9. L'appareil pour un liage du leurre de pêche selon la revendication 4, **caractérisé en ce que** appareil de perçage du leurre de pêche (5) attribué les pinces-tentacules (30) du crochet principal (3) comprend un entraînement (52) avec un guide linéaire, dans lequel sur la partie mobile de l'entraînement (52) est une aiguille (50), ledit appareil (5) comprend en outre des vises d'arrêt (53, 54) et des capteurs de positions d'extrémité de l'aiguille (50) à l'arrière de l'entraînement (52) est fixée à une butée réglable supplémentaire (55) de l'aiguille (50), qui est associée une butée de basculement (56) avec un entraînement (57), ledit dispositif (5) comprend en outre un frein à disque (58) des fils (51) et un guide-fil (510, 511).

10. Le dispositif pour un liage du leurre de pêche selon la revendication 4, **caractérisé en ce que** les pinces-tentacules (30) du crochet principal (3) est affecté boucleurs mécanisme (7) qui comprend une pince (70) monté de façon pivotante sur une broche (72) qui est couplé avec un entraînement (73), dans lequel la pince (70) est couplé avec l'entraînement (71).

11. Le dispositif pour un liage du leurre de pêche selon la revendication 4, **caractérisé en ce que** les pinces-tentacules (30) du crochet principal (3) est affectée une fourchette de déplacement mobile (8) du fil (51) qui est couplé avec l'entraînement (80), dans lequel le trajet de déplacement l'extrémité de travail (82) de déplacement de fourche (8) entre une position de repos en dehors de l'espace de travail (P) et une position de travail dans la chambre de travail (P) intersecte le trajet du fil (51) entre le leurre de pêche percé l'amorce et l'aiguille (50) faisant saillie à partir du leurre de pêche après le ponction.

12. Le dispositif pour liage du leurre de pêche selon la revendication 4, **caractérisé en ce que** l'aiguille de soudage (90) est monté sur un bras oscillant (91) qui est monté oscillant dans l'équipement de construction et est couplé avec l'entraînement (92).

13. Le dispositif pour liage du leurre de pêche selon la revendication 4, **caractérisé en ce que** les pinces-tentacules (30) du crochet principal (3) est associé à des moyens (93) pour interrompre le fil (51); il interrompt le fil entre le leurre de pêche et l'aiguille (50) dans une position faisant saillie à partir du leurre de pêche après le ponction.

14. Le leurre de pêche, qui est fourni avec l'attache du fil qui traverse par son fil le centre du leurre de pêche, **caractérisé en ce que** le fil contient le composant fusible et les extrémités de l'attache du fil sont tordus en dehors de l'appât et sont thermiquement rejoints.

15. Le dispositif pour liage du leurre de pêche selon la revendication 14, **caractérisé en ce que** le fil formant l'attache du fil du leurre de pêche, est doublé et il passe par le centre du leurre de pêche, dans lequel une extrémité libre du fil (51) est à l'intérieur du leurre de pêche, de sorte que, d'une part du leurre de pêche dégage la boucle (5112), et d'autre part du leurre de pêche n'est que le fil simple (51), en même temps la partie double du fil (51) et une partie du fil unique (51) sont sur la partie du pourtour inférieur du leurre de pêche enroulé en plusieurs spires et étant collé à chaud.
